# EUROPEAN PATENT SPECIFICATION

(11) **EP 2 653 329 B1**
(45) Date of publication and mention of the grant of the patent: **09.01.2019**
(21) Application number: 13163503.9
(22) Date of filing: 12.04.2013
(51) Int. Cl.: B60H 1/00, F25B 39/02, F28D 1/03, F28D 20/02, F28D 15/02

(54) **Evaporator for air conditioning with phase change material for a thermal syphon operation mode**
Verdampfer mit Phasenwechselmaterial für Thermosyphon-Betrieb
Evaporateur avec matériau à changement de phase pour mode d'opération comme thermosiphon

(30) Priority: 20.04.2012 US 201213451665
(43) Date of publication of application: 23.10.2013
(73) Proprietor: MAHLE International GmbH, 70376 Stuttgart (DE)
(72) Inventor: Vreelaand, Gary S., Medina, NY New York 14103 (US); Wolfe IV, Edward, Clarence Center, NY New York 14032 (US); Lipa, Scott B., Snyder, NY New York 14226 (US); Kadle, Prasad Shripad, Williamsville, NY New York 14221 (US)
(74) Representative: BRP Renaud & Partner mbB Rechtsanwälte Patentanwälte Steuerberater

(56) References cited:
- EP-A1- 2 636 980
- EP-A2- 1 657 090
- DE-A1-102004 055 339
- DE-A1-102007 039 119
- US-A1- 2010 313 587
- US-A1- 2011 154 855
- US-A1- 2011 239 696
- US-A1- 2012 042 687
- US-B2- 7 156 156

## Description

### FIELD OF THE INVENTION

An air conditioning system for cooling the cabin of a vehicle.

### BACKGROUND OF THE INVENTION

Fuel efficiency in vehicles is enhanced by shutting off the gasoline engine during inefficient periods, such as when the vehicle is coasting or temporarily stopped. However, the compressor of a traditional air conditioning system runs off the crankshaft of the gasoline engine, and therefore, the gasoline engine continues to operate during those inefficient periods to prevent uncomfortable conditions for the passengers of the vehicle. It is desirable to have an air conditioning system that continues to operate when the engine is shut off, so that vehicles may shut off their gasoline engine during those inefficient periods.

US Patent No. 7,156,156, issued to Haller et al. on January 2, 2007 (hereinafter referred to as Haller '156), provides one solution to the problem of the air conditioning system not functioning when the engine is not running. The Haller '156 patent shows an evaporator having a refrigerant flowing there-through for transferring heat from a flow of air to the refrigerant in a first operating mode with the engine of the vehicle running. The evaporator includes a manifold extending in a horizontal direction. At least one tube is in fluid communication with manifold and extends downward in a vertical direction away from the manifold. The evaporator defines at least one cavity, or phase change material (PCM) tank, for storing a phase change material to transfer heat from the phase change material to the refrigerant to cool and freeze the phase change material in the first operating mode with the engine of the vehicle running.

The cavities of the Haller '156 patent are disposed adjacent to and engaging the plurality of tubes. In a second operating mode with the engine of the vehicle dormant, heat is transferred directly from the flow of air to the phase change material in the cavities to cool the flow of air and to melt or warm the phase change material. There remains a continuing need for improved air conditioning systems that continue to operate during inefficient periods when the engine of the vehicle is shut off.
In DE102004055339 is disclosed a heat exchanger as in the preamble of claim 1.

### SUMMARY OF THE INVENTION

The invention provides for an evaporator according to claim 1 having a PCM housing
engaging the upper region of the refrigerant tubes of the evaporator. In the second operating mode, heat is transferred from the refrigerant to the frozen phase change material to cool and condense the refrigerant. The refrigerant falls downward in the vertical direction through the tube. The condensed refrigerant then receives heat from the flow of air to cool the flow of air and to warm and evaporate the refrigerant. The evaporated refrigerant rises upwardly in the vertical direction back to the low pressure of the cold manifold where it dispenses heat to the frozen phase change material.

The evaporator for an air conditioning system provides for an improved passive system for cooling the cabin of a vehicle, both when the engine is running and dormant. It can also be used in a non-vehicular application. It is less voluminous, cheaper and easier to manufacture than the air conditioning systems of the prior art that continue to operate when the engine of the vehicle is dormant. Additionally, because the PCM housing engages the upper region of the refrigerant tubes, in which the lower temperature phase change material induces a thermal siphon of the refrigerant contained in the refrigerant tubes to continue cooling an on-coming air stream during brief periods where the engine of the vehicle is dormant. Lastly, it can be integrated into a pre-existing evaporator by engaging a PCM housing between adjacent refrigerant tubes.

### BRIEF DESCRIPTION OF THE DRAWINGS

Other advantages of the present invention will be readily appreciated, as the same becomes better understood by reference to the following detailed description when considered in connection with the accompanying drawings wherein:
Figure 1 is a perspective view of the exemplary embodiment of the evaporator;
Figure 2 is a cross-sectional view of the exemplary embodiment of the evaporator taken along line 2-2 of Figure 1;
Figure 3 is a flow-chart of the exemplary embodiment of the air conditioning system;
Figure 4 is a perspective view of the exemplary embodiment of the input and output manifolds; and
Figure 5 is a cross-sectional view of one of the tubes taken along Line 5-5 of Figure 2.
Figure 6 is a perspective view of an alternative embodiment of an evaporator having a plurality of PCM housings sandwiched between adjacent refrigerant tubes.
Figure 7 is a perspective exploded view of the evaporator shown in Figure 6.
Figure 8 shows a schematic diagram of the thermal siphon effect through a refrigerant tube of the evaporator shown in Figure 6.
Figure 9 shows a plate of the PCM housing.
Figure 10 shows a cross-section of a PCM housing engaged to an upper portion of a refrigerant tube.

### DESCRIPTION OF THE PREFERRED EMBODIMENT

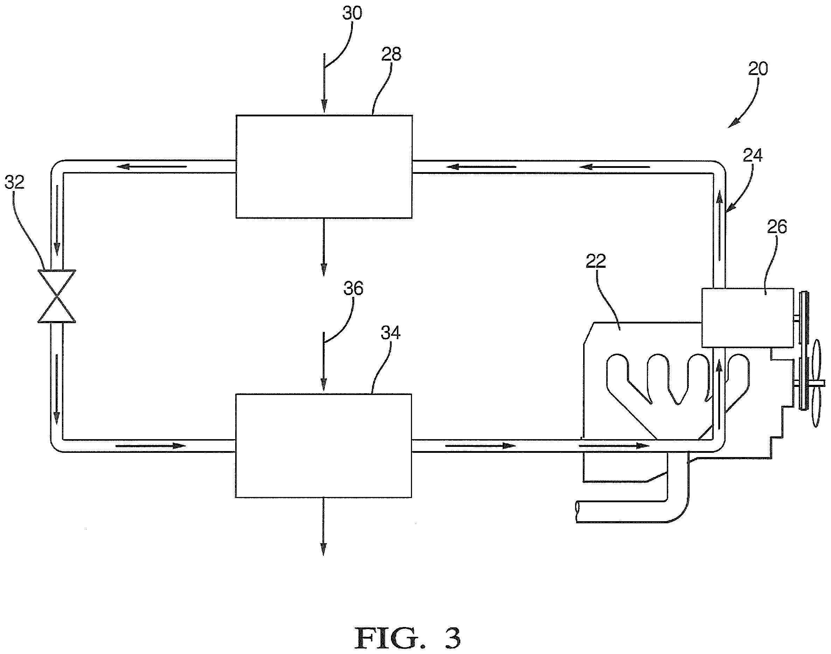

Referring to the Figures, wherein like numerals indicate corresponding parts throughout the several views, an air conditioning system 20 is generally shown in Figure 3. In the exemplary embodiment, the air conditioning system 20 is shown in a vehicle having an engine 22, but the air conditioning system 20 could also be used to cool a building or any other structure. The vehicle of the exemplary embodiment has a first operating mode with the engine 22 of the vehicle running and a second operating mode with the engine 22 of the vehicle dormant. The second operating mode could be a number of different driving conditions, e.g. when the vehicle is coasting or temporarily stopped. The air conditioning system 20 is particularly effective when used in a hybrid-electric vehicle because the air conditioning system 20 of the exemplary embodiment continues to provide cooling for the cabin of the vehicle when the electric motor is driving the vehicle.

The air conditioning system 20 includes a refrigerant loop 24, generally indicated in Figure 3, for cycling a refrigerant. The refrigerant loop 24 includes a compressor 26 for compressing the refrigerant to a superheated gas in the first operating mode. In the exemplary embodiment, the compressor 26 is operably connected to the engine 22 of the vehicle. In other words, the compressor 26 functions only when the engine 22 of the vehicle is running. Alternately, the compressor 26 could be electrically driven, e.g. when the air conditioning system 20 is used to cool a building, or for an electric vehicle without an engine 22.

The refrigerant loop 24 further includes a condenser 28 in fluid communication with the compressor 26 for receiving the superheated refrigerant and for transferring heat from the refrigerant to a first flow of air 30 to condense the refrigerant to a liquid. The refrigerant loop 24 further includes an expansion valve 32 in fluid communication with the condenser 28 for receiving the liquid refrigerant and for subcooling the refrigerant.

An evaporator 34 completes the refrigerant loop 24 and is in fluid communication with the expansion valve 32 for receiving the subcooled refrigerant. The evaporator 34 transfers heat from a second flow of air 36 to the refrigerant to evaporate the refrigerant to a gas and to cool the second flow of air 36. In the exemplary embodiment, the second flow of air 36 is for cooling the cabin of the vehicle in the first operating mode with the engine 22 of the vehicle running, but as explained above, the second flow of air 36 could also be for cooling a building.

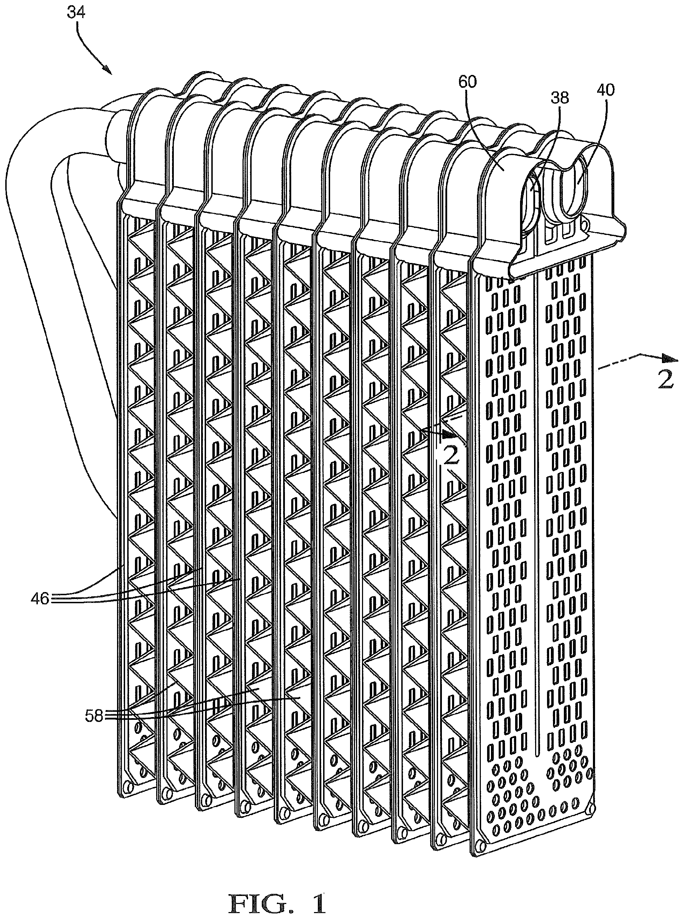

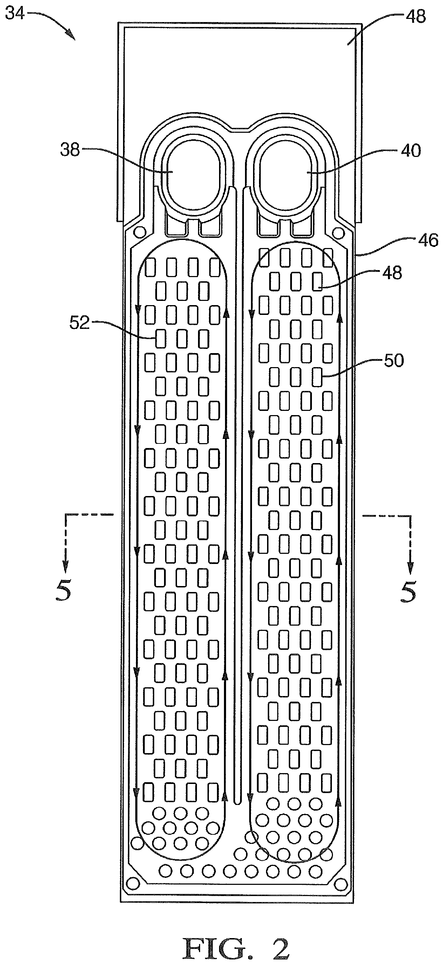

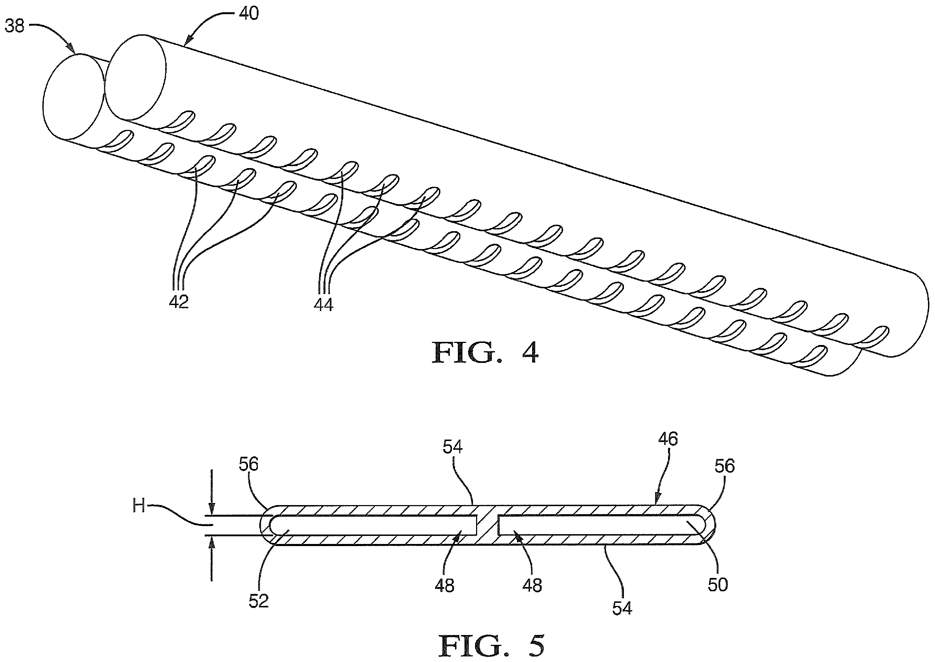

The evaporator 34 of the exemplary embodiment, generally shown in Figures 1 and 2, includes an input manifold 38 and an output manifold 40 extending in spaced and parallel relationship in a horizontal direction, best shown in Figures 1, 2 and 4. The input manifold 38 defines a plurality of input tube slots 42 horizontally spaced from one another, and the output manifold 40 defines a plurality of output tube slots 44 horizontally spaced from one another and aligned the input tube slots 42. The evaporator 34 further includes a plurality of tubes 46. In the exemplary embodiment with the air conditioning system 20 being in a vehicle, the tubes are preferably of aluminum. Where the air conditioning system 20 is used for cooling a building, the tubes are preferably of copper. Each of the tubes 46 defines a fluid passage 48 extending between the aligned input and output tube slots 42, 44 for conveying the refrigerant from the input manifold 38 to the output manifold 40. Each of the fluid passages 48 defines a first leg 50 in fluid communication with one of the input tube slots 42 and a second leg 52 in fluid communication with the aligned output tube slot 44. The first and second legs 50, 52 of the fluid passage 48 extend downward in parallel relationship with one another away from the input and output manifolds 38, 40. The first and second legs 50, 52 the fluid passage 48 are interconnected vertically below the input and output manifolds 38, 40 to define a U-shape for the fluid passage 48. As best shown in Figure 5, each of the tubes 46 has a cross-section presenting flat sides 54 interconnected by round ends 56. Each of the first and second legs 50, 52 of the fluid passage 48 has a height H of at least 0.8 mm.

An air fin 58 is disposed between and engages the flat sides 54 of adjacent tubes 46 for receiving heat from the second flow of air 36. In the exemplary embodiment, the air fins 58 are brazed to the flat sides 54 of the adjacent ones of the tubes 46. The air fins 58 of the exemplary embodiment are also corrugated to increase heat transfer from the refrigerant in the evaporator 34 to the second flow of air 36.

The evaporator 34 defines at least one PCM tank 60 for storing a phase change material. The phase change material may be that of a liquid saturated hydrocarbon having a molecular formula of CnH2n+2, a paraffin wax, or any other material that may remain in a liquid phase at room temperature. When operating in the first operating mode heat is transferred from the phase change material to the sub-cooled refrigerant to cool and freeze the phase change material.

In the exemplary embodiment, the PCM tank 60 engages the input and output manifolds 38, 40. In the second operating mode, heat is transferred from the refrigerant to the frozen phase change material to cool and condense the refrigerant. The condensed refrigerant in the input and output manifolds 38, 40 increases in density and falls downwardly in the vertical direction through the first and second legs 50, 52 of the fluid passages 48 of the tubes 46, due to gravity. The condensed refrigerant then receives heat from the second flow of air 36 to cool the second flow of air 36 and evaporate the refrigerant. The evaporated refrigerant flows upwardly in the vertical direction through the first and second legs 50, 52 of the fluid passages 48 of the tubes 46 and back to the low pressure of the cool input and output manifolds 38, 40 where it is subsequently re-cooled and condensed by transferring heat to the frozen phase change material. In other words, in the exemplary embodiment, the evaporator 34 continues to cool the second flow of air 36, even when the vehicle is in the second operating mode with the engine 22 of the vehicle dormant.

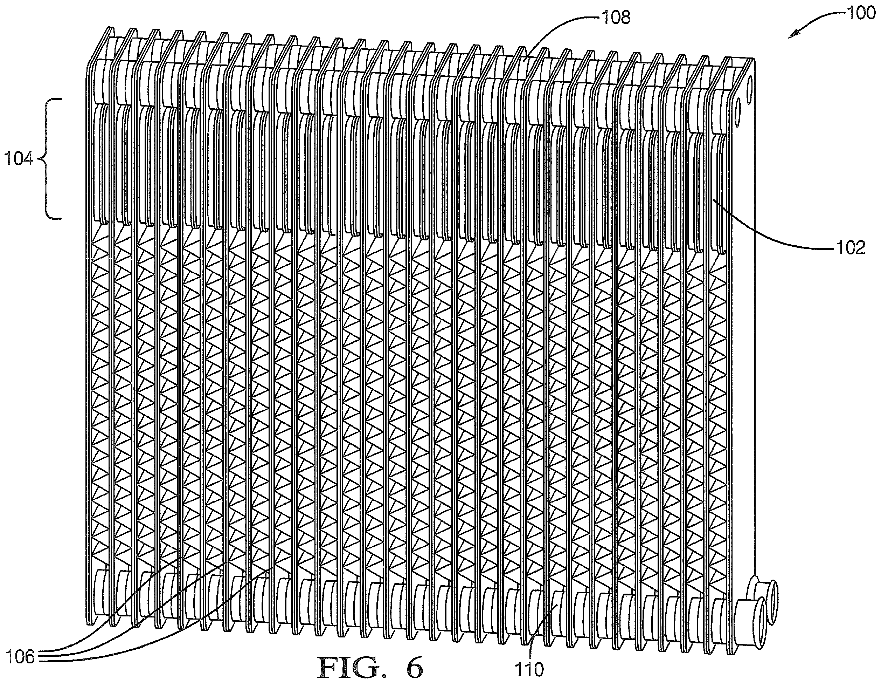

Shown in Fig. 6 is an alternative exemplary embodiment of an evaporator 100 having a plurality of PCM housings 102 in thermal communication with the upper region 104 of the refrigerant tubes 106. The evaporator 100 includes an upper manifold 108 and a lower manifold 110, in which the terms upper and lower are used with respect to the direction of gravity. Hydraulically connecting the upper manifold 108 with the lower manifold 110 are flat refrigerant tubes 106 which may be manufactured by any methods known to those of ordinary skill in the art, such as by extrusion, folding of a sheet of heat conductive material, or assembling two half plates having stamped features defining flow spaces. While flat tubes are shown, those of ordinary skill in the art would recognize that other refrigerant tube shapes may be utilized.

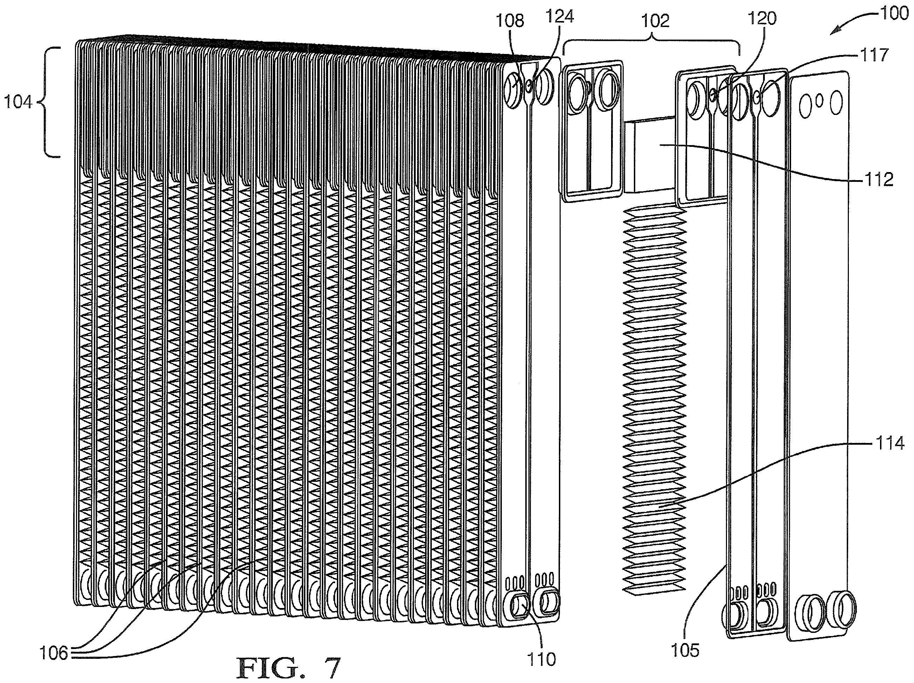

Shown in Fig. 7 is a partially exploded view of the evaporator 100, which is manufactured from a plurality stamped metallic plates 105. The stamped metallic plates 105 include features known to those of ordinary skill in the art, such as openings, bosses about selected openings, and flanges. When stacked and brazed, the plurality of stamped metallic plates 105 define the upper manifold 108, lower manifold 110, and flat refrigerant tubes 106 hydraulically connecting the manifolds 108, 110. Inserted between adjacent flat refrigerant tubes 106 is a PCM housing 102 containing a phase change material. The PCM housing 102 may be defined by features on the stacked and brazed stamped metallic plates 105, or may be manufactured separately and then assembled onto the evaporator 100. A PCM housing 102 is disposed between adjacent flat refrigerant tubes 106 and is in thermal contact with only the upper region 104 of the flat refrigerant tubes 106. The PCM housing 102 may surround part of the upper manifold 108 or, as an alternative, the PCM housing 102 may be separate from the upper manifold 108 and positioned in the upper region 104 of the flat refrigerant tubes 106 immediately below the upper manifold 108. A heat conductive material such as metallic particles or fibers are added in the PCM housing 102 to increase the heat transfer efficiency. Corrugated fins 114 may be inserted between the adjacent flat refrigerant tubes 106 beneath the PCM housing 102.

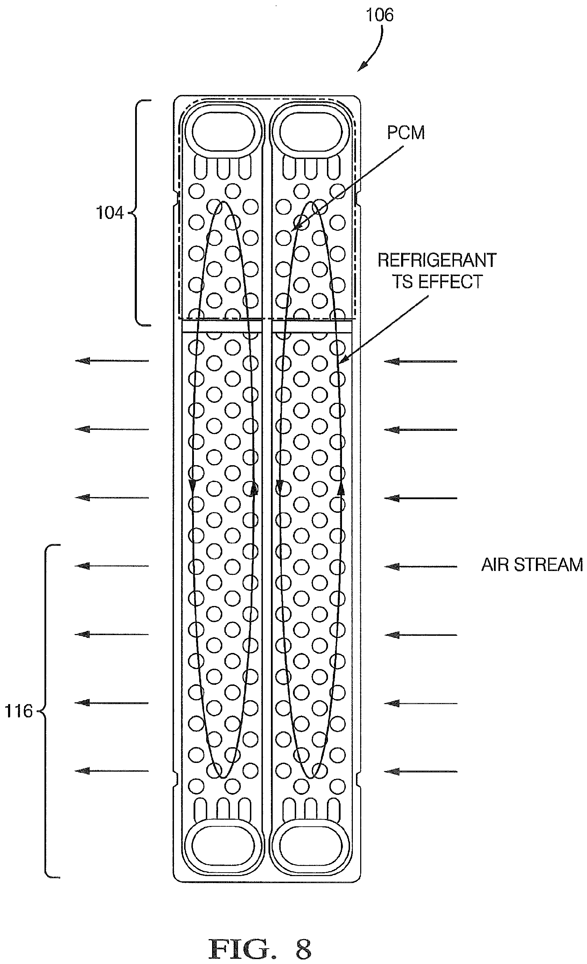

Referring to Fig. 8, as disclosed herein above, in the second operating mode with the engine 22 of the vehicle dormant, heat is transferred from the higher temperature vapor refrigerant to the lower temperature frozen phase change material in the upper region 104 of the flat refrigerant tubes, thereby cooling and condensing the refrigerant into a liquid phase. As the higher density condensed liquid phase refrigerant settles toward the lower portion 116 of the flat refrigerant tubes 106, the refrigerant absorbs heat from the on-coming air stream and expands into a vapor phase. The lower density vapor refrigerant flows upwardly back toward the lower temperature phase change material where the vapor refrigerant is subsequently re-cooled and re-condensed to repeat the thermal siphon cycle. In other words, by positioning the phase change material to be in thermal contact with only the upper region 104 of the flat refrigerant tubes 106, the lower temperature phase change material induces a thermal siphon within the flat refrigerant tubes 106 that allows the refrigerant to continue to cool the on-coming air stream while the compressor of the air conditioning system is not operating for short periods of time.

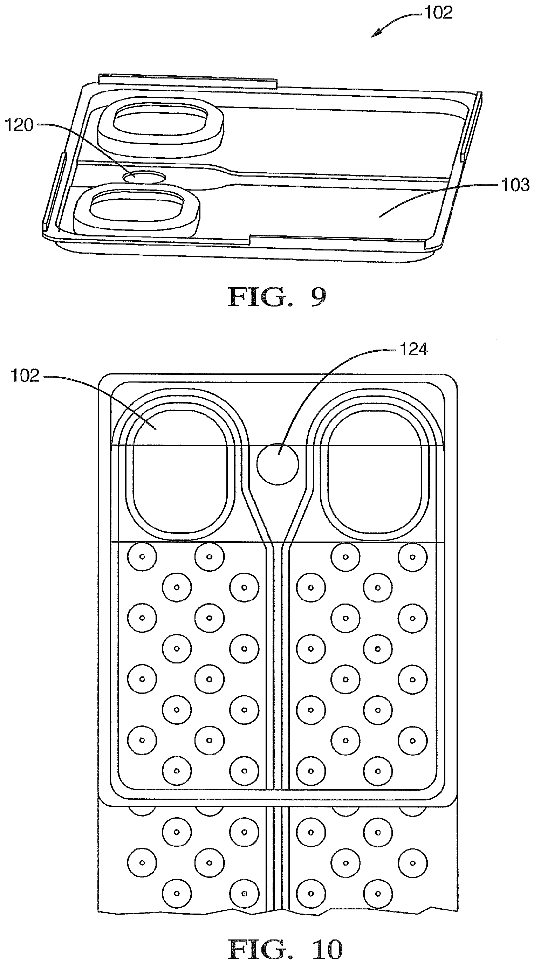

Referring to Fig. 9, the PCM housing 102 may be formed of two half plates 103 that include complementary features that allow the PCM housing 102 to be assembled like that of two halves of a clam shell. The two half plates 103 may include bosses and apertures that cooperate with bosses and apertures of the metallic plates that form the flat tubes to define the upper manifolds 108. The two half plates 103 may also include PCM ports 120 that cooperate with through-holes 117 in the flat refrigerant tubes 106 to define a PCM passageway 124 for hydraulic communication of the phase change material between the PCM housings 102. The PCM passageway 124 allows for the ease of filling the PCM housings 102 with the phase change material during manufacturing and also allows for the phase change material to migrate from one PCM housing 102 to another to account for unequal expansion of the phase change material in the PCM housings 102 due to thermal gradient across the evaporator 100.

Referring to Fig. 10, by positioning the phase change material below the upper manifolds 108 allow greater thermal conductivity between the phase change material and refrigerant. The length of the PCM housing 102 may be adjusted to provide the desired volume of phase change material required to achieve the desire cooling performance while the engine of the vehicle is dormant. It is preferable to fill less than the full capacity of the PCM housing with the phase change material to account for the volumetric expansion of the material at elevated temperatures up to 200°F. The position of the PCM port 120 is positioned with respect to the PCM housing 102 to allow the phase change material to migrate between the PCM housings. If the PCM port 120 is too high, the phase change material cannot redistribute and equalization of the PCM housing volume between spaces will not occur. A uniform distribution of phase change material will minimize cost and ensure optimum operation. If a PCM housing 102 has excess phase change material, it will result in additional cost; too little phase change material, it will result in poor performance in that portion of the evaporator 100.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An evaporator (100) for an air conditioning system (20), comprising:
a first manifold (108);
a second manifold (110) spaced from and substantially parallel with said first manifold (108);
a plurality of refrigerant tubes (106) hydraulically connecting said first and second manifolds (108, 110) for a refrigerant flow therebetween, wherein said plurality of refrigerant tubes (106) includes an upper region (104) and a lower region (116) with respect to gravity; and
a first phase change material (pcm) housing (102) configured to contain a phase change material such that the phase change material is in thermal contact with at least one of said plurality of refrigerant tubes (106), wherein the only portion of said at least one of said plurality of refrigerant tubes (106) that the phase change material is in thermal contact with is the upper region (104),
the evaporator (100) further comprising a second pcm housing (102) configured to contain a phase change material such that the phase change material is in thermal contact with said at least one of said plurality of refrigerant tubes (106), wherein the only portion of said at least one of said plurality of refrigerant tubes (106) that the phase change material is in thermal contact with is the upper region (104) and
wherein said first pcm housing (102) is in hydraulic communication with said second pcm housing (102) for hydraulic communication of phase change material there between and,
wherein said at least one of refrigerant tubes (106) includes two opposing flat surfaces, and wherein each of said pcm housings (102) is in thermal contact with said opposing flat surfaces, respectively, **characterized in that**,
said at least one of refrigerant tubes (106) is a flat refrigerant tube (106) having a through-hole (117) between said opposing flat surfaces, wherein said first and second pcm housings (102) include a pcm port (120),wherein said through-hole (117) of said at least one of flat refrigerant tubes (106) cooperation with said pcm ports (120) of said pcm housings (102) to define a pcm passageway (124) hydraulically interconnecting said pcm housings (102) and,
**in that** said pcm housing (102) contains a heat conductive material (112) and said heat conductive material (112) includes metallic particles or fibers.

2. The evaporator (100) for an air conditioning system (20) of claim 1, wherein said second manifold (110) is spaced beneath said first manifold (108) with respect to the direction of gravity.

3. The evaporator (100) for an air conditioning system (20) of claim 2, wherein said upper region (104) of said plurality of refrigerant tubes (106) is adjacent to said first manifold (108) and said lower region (116) of said plurality of refrigerant tubes (106) is adjacent to said second manifold (110).

4. The evaporator (100) for an air conditioning system (20) of claim 1, wherein said pcm housing (102) includes a first stamped plate (105) and a second stamped plate (105), wherein said stamped plates (105) have complementary features such that the plates (105) cooperates with each other when assembled to define a chamber to contain a phase change material and at least one pcm port (120).

## Patentansprüche

1. Verdampfer (100) für ein Klimaanlagensystem (20), umfassend:
einen ersten Verteiler (108);
einen zweiten Verteiler (110), der vom ersten Verteiler (108) beabstandet und im Wesentlichen parallel zu demselben ist;
eine Vielzahl von Kühlmittelröhren (106), die den ersten und zweiten Verteiler (108, 110) hydraulisch verbinden, für einen Kühlmittelstrom zwischen denselben, wobei die Vielzahl von Kühlmittelröhren (106) in Bezug auf Schwerkraft eine obere Region (104) und eine untere Region (116) einschließen; und
ein erstes Phasenwechselmaterial (PCM) Gehäuse (102), das so ausgestaltet ist, dass es ein Phasenwechselmaterial derart enthält, dass das Phasenwechselmaterial mit mindestens einer aus der Vielzahl von Kühlmittelröhren (106) in thermischem Kontakt steht, wobei der einzige Abschnitt der mindestens einen aus der Vielzahl von Kühlmittelröhren (106), mit dem das Phasenwechselmaterial in thermischem Kontakt steht, die obere Region (104) ist,
wobei der Verdampfer (100) weiter ein zweites PCM-Gehäuse (102) umfasst, das so ausgestaltet ist, dass es ein Phasenwechselmaterial derart enthält, dass das Phasenwechselmaterial mit der mindestens einen aus der Vielzahl von Kühlmittelröhren (106) in thermischem Kontakt steht, wobei der einzige Abschnitt der mindestens einen aus der Vielzahl von Kühlmittelröhren (106), mit dem das Phasenwechselmaterial in thermischem Kontakt steht, die obere Region (104) ist, und
wobei das erste PCM-Gehäuse (102) mit dem zweiten PCM-Gehäuse (102) in hydraulischer Kommunikation steht, für hydraulische Kommunikation von Phasenwechselmaterial zwischen denselben, und
wobei die mindestens eine von Kühlmittelröhren (106) zwei gegenüberliegende flache Flächen einschließt, und wobei jedes der PCM-Gehäuse (102) jeweils mit den gegenüberliegenden flachen Flächen in thermischem Kontakt steht, **dadurch gekennzeichnet, dass**
die mindestens eine von Kühlmittelröhren (106) eine flache Kühlmittelröhre (106) ist, die ein Durchgangsloch (117) zwischen den gegenüberliegenden flachen Flächen aufweist, wobei das erste und zweite PCM-Gehäuse (102) einen PCM-Anschluss (120) einschließen, wobei das Durchgangsloch (117) des mindestens einen von flachen Kühlmittelröhren (106) mit den PCM-Anschlüssen (120) der PCM-Gehäuse (102) Zusammenwirken, um einen PCM-Kanal (124) zu definieren, der die PCM-Gehäuse (102) hydraulisch miteinander verbindet, und
dadurch, dass das PCM-Gehäuse (102) ein wärmeleitendes Material (112) enthält, und das wärmeleitende Material (112) metallische Teilchen oder Fasern einschließt.

2. Verdampfer (100) für ein Klimaanlagensystem (20) nach Anspruch 1, wobei der zweite Verteiler (110) in Bezug auf die Schwerkraftrichtung unterhalb des ersten Verteilers (108) beabstandet ist.

3. Verdampfer (100) für ein Klimaanlagensystem (20) nach Anspruch 2, wobei die obere Region (104) der Vielzahl von Kühlmittelröhren (106) zum ersten Verteiler (108) benachbart ist, und die untere Region (116) der Vielzahl von Kühlmittelröhren (106) zum zweiten Verteiler (110) benachbart ist.

4. Verdampfer (100) für ein Klimaanlagensystem (20) nach Anspruch 1, wobei das PCM-Gehäuse (102) eine erste gestanzte Platte (105) und eine zweite gestanzte Platte (105) einschließt, wobei die gestanzten Platten (105) derart komplementäre Merkmale aufweisen, dass die Platten (105), wenn sie zusammengebaut sind, so miteinander zusammenwirkt, dass sie eine Kammer definieren, um ein Phasenwechselmaterial und mindestens einen PCM-Anschluss (120) zu enthalten.

## Revendications

1. Évaporateur (100) pour un système de climatisation (20), comprenant :
un premier collecteur (108) ;
un second collecteur (110) espacé et sensiblement parallèle audit premier collecteur (108) ;
une pluralité de tubes de réfrigérant (106) reliant de manière hydraulique lesdits premier et second collecteurs (108, 110) pour un flux réfrigérant entre eux, dans lequel ladite pluralité de tubes de réfrigérant (106) inclut une région supérieure (104) et une région inférieure (116) par rapport à la gravité ; et
un premier logement de matière à changement de phase (pcm) (102) configuré pour contenir une matière à changement de phase de sorte que la matière à changement de phase est en contact thermique avec au moins un de ladite pluralité de tubes de réfrigérant (106), dans lequel la seule portion dudit au moins un tube de ladite pluralité de tubes de réfrigérant (106) avec laquelle la matière à changement de phase est en contact thermique est la région supérieure (104),
l'évaporateur (100) comprenant en outre un second logement de pcm (102) configuré pour contenir une matière à changement de phase de sorte que la matière à changement de phase est en contact thermique avec ledit au moins un tube de ladite pluralité de tubes de réfrigérant (106), dans lequel la seule portion dudit au moins un tube de ladite pluralité de tubes de réfrigérant (106) avec laquelle la matière à changement de phase est en contact thermique est la région supérieure (104) et
dans lequel ledit premier logement de pcm (102) est en communication hydraulique avec ledit second logement de pcm (102) pour une communication hydraulique de matière à changement de phase entre eux et,
dans lequel ledit au moins un des tubes de réfrigérant (106) inclut deux surfaces plates opposées, et dans lequel chacun desdits logements de pcm (102) est respectivement en contact thermique avec lesdites surfaces plates opposées, **caractérisé en ce que**,
ledit au moins un des tubes de réfrigérant (106) est un tube de réfrigérant plat (106) ayant un trou traversant (117) entre lesdites surfaces plates opposées, dans lequel lesdits premier et second logements de pcm (102) incluent un orifice de pcm (120), dans lequel ledit trou traversant (117) dudit au moins un des tubes de réfrigérant plats (106) coopération avec lesdits orifices de pcm (120) desdits logements de pcm (102) pour définir un passage de pcm (124) interconnectant de manière hydraulique lesdits logements de pcm (102) et,
**en ce que** ledit logement de pcm (102) contient une matière conductrice de chaleur (112) et ladite matière conductrice de chaleur (112) inclut des particules ou des fibres métalliques.

2. Évaporateur (100) pour un système de climatisation (20) selon la revendication 1, dans lequel ledit second collecteur (110) est espacé au-dessous dudit premier collecteur (108) par rapport à la direction de gravité.

3. Évaporateur (100) pour un système de climatisation (20) selon la revendication 2, dans lequel ladite région supérieure (104) de ladite pluralité de tubes de réfrigérant (106) est adjacente audit premier collecteur (108) et ladite région inférieure (116) de ladite pluralité de tubes de réfrigérant (106) est adjacente audit second collecteur (110).

4. Évaporateur (100) pour un système de climatisation (20) selon la revendication 1, dans lequel ledit logement de pcm (102) inclut une première plaque estampée (105) et une seconde plaque estampée (105), dans lequel lesdites plaques estampées (105) ont des détails complémentaires de sorte que les plaques (105) coopère l'une avec l'autre quand elles sont assemblées pour définir une chambre afin de contenir une matière de changement de phase et au moins un orifice de pcm (120).
